(19) **Europäisches Patentamt / European Patent Office / Office européen des brevets**

(11) **EP 3 828 048 B1**

(12) **EUROPEAN PATENT SPECIFICATION**

(45) Date of publication and mention
of the grant of the patent:
**24.01.2024 Bulletin 2024/04**

(21) Application number: **20206886.2**

(22) Date of filing: **11.11.2020**

(51) International Patent Classification (IPC):
**B60W 20/10** *(2016.01)* **B60W 30/18** *(2012.01)*
**B60W 40/105** *(2012.01)* **B60W 50/00** *(2006.01)*

(52) Cooperative Patent Classification (CPC):
**B60W 20/10; B60W 30/18127; B60W 40/105;**
**B60W 50/0097;** B60W 2050/0028; B60W 2520/10;
Y02T 10/72; Y02T 10/92

(54) **TRAVEL CONTROL DEVICE, TRAVEL CONTROL METHOD, AND NON-TRANSITORY STORAGE MEDIUM**

FAHRTSTEUERUNGSVORRICHTUNG, FAHRTSTEUERUNGSVERFAHREN UND
NICHTTRANSITORISCHES SPEICHERMEDIUM

DISPOSITIF DE COMMANDE DE DÉPLACEMENT, PROCÉDÉ DE COMMANDE DE DÉPLACEMENT
ET SUPPORT D'ENREGISTREMENT NON TRANSITOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.11.2019 JP 2019205032**

(43) Date of publication of application:
**02.06.2021 Bulletin 2021/22**

(73) Proprietor: **TOYOTA JIDOSHA KABUSHIKI
KAISHA**
**Toyota-shi**
**Aichi-ken 471-8571 (JP)**

(72) Inventors:
• **TOKURA, Takaaki**
**Aichi-ken 471-8571 (JP)**
• **KONO, Katsumi**
**Aichi-ken 471-8571 (JP)**
• **YASUDA, Takeshi**
**Aichi-ken 471-8571 (JP)**

(74) Representative: **J A Kemp LLP**
**80 Turnmill Street**
**London EC1M 5QU (GB)**

(56) References cited:
**DE-A1-102016 102 822** **DE-T5-112016 005 586**
**DE-T5-112017 005 969** **US-A1- 2018 281 775**
**US-A1- 2019 001 984**

**Description**

BACKGROUND OF THE INVENTION

1. Field of the Invention

The invention relates to a travel control device that is mounted on a vehicle, a travel control method, and a non-transitory storage medium.

2. Description of Related Art

With a hybrid vehicle including an electric motor and an internal combustion engine, it is possible to improve fuel efficiency by travel control in which the electric motor and the internal combustion engine are used selectively and efficiently.

Japanese Patent No. 4702086 (JP 4702086 B) discloses a vehicle driving support device that informs a user of a brake starting point at which regenerative braking operation needs to be started, based on the position of the vehicle and map information including a stop-required point such as a railroad crossing or a deceleration-required point such as a curve. In the vehicle driving support device, the user is prompted to operate the regenerative brake at a deceleration speed that enables efficient recovery of regenerative energy, and thus the amount of regenerative energy to be recovered can be increased. US2019/001984 and DE11 2016 005586 T5 disclose a travel control device according to the pre-characterising section of claim 1.

SUMMARY OF THE INVENTION

In the technique of JP 4702086 B, a point at which the recovery of the regenerative energy can be assumed can be predicted, but the recovery amount of the regenerative energy cannot be predicted quantitatively. In the case where the recovery amount of the regenerative energy can be quantitatively predicted at an early stage, the recovery amount may be used for suitable travel control.

The invention provides a travel control device, a travel control method, and a non-transitory storage medium for quantitatively predicting the recovery amount of the regenerative energy to be used for travel control.

A first aspect of the invention relates to a travel control device mounted on a vehicle including an electric motor and an internal combustion engine as a power source. The travel control device includes a creation unit configured to create a speed profile in which a speed of the vehicle at each time is predicted, an estimation unit configured to estimate a predicted amount of regenerative energy, the regenerative energy being energy that is recoverable by regenerative braking of the electric motor, and a determination unit configured to determine the power source to be used for traveling based on the predicted amount of the regenerative energy, characterized in that the estimation unit is configured to approximate the speed profile with a predetermined approximation model to result in an approximation result and estimate the predicted amount of regenerative energy based on an approximation result.

In the travel control device of the first aspect, the creation unit may be configured to create the speed profile based on one of or both of a travel history of a user and a travel history of another user.

In the travel control device of the first aspect, the predetermined approximation model may be configured to use a model that approximates a change in the speed of the vehicle over time that is indicated in the speed profile with a sum of Gaussian functions having different peak positions.

In the travel control device of the first aspect, the estimation unit may be configured to derive, based on the approximation result, a power indicated by a sum of a power that contributes to a change in kinetic energy of the vehicle and a power that is dissipated by travel resistance, and regard a time integration value of a magnitude of the power during a period as an estimated value of a predicted amount of the regenerative energy to be recovered. The period is one or more periods in which the power is negative and a period in which the regenerative energy is recoverable.

In the travel control device of the first aspect, the estimation unit may be configured to estimate the predicted amount of the regenerative energy based further on one or more variation factors.

In the travel control device of the first aspect, the variation factors may be at least one of a type of a road surface, a slope of the road surface, a load weight of the vehicle, and weather.

In the travel control device of the first aspect, the estimation unit may be configured to correct the power based on the variation factors.

In the travel control device of the first aspect, the estimation unit may be configured to correct the time integration value based on the variation factors.

In the travel control device of the first aspect, the determination unit may be configured to determine that the electric motor is to be used for traveling when a condition including that a total amount of energy for the electric motor that is currently charged in the vehicle and the predicted amount of the regenerative energy in the next period is equal to or higher than a threshold is satisfied.

A second aspect of the invention relates to a travel control method executed by a travel control device mounted on a vehicle including an electric motor and an internal combustion engine as a power source. The travel control method includes creating a speed profile in which a speed of the vehicle at each time is predicted, estimating a predicted amount of regenerative energy, the regenerative energy being energy that is recoverable by regenerative braking of the electric motor, and determining the power source used for traveling based on the predicted amount of the regenerative energy, characterized by approximating the speed profile with a predetermined approximation model to result in an approximation result and in that the estimating a predicted amount of regenerative energy is based on the approximation result.

A third aspect of the invention relates to a non-transitory storage medium that stores a travel control program that causes a computer of a travel control device that is mounted on a vehicle including an electric motor and an internal combustion engine as a power source to execute the following functions: creating a speed profile in which a speed of the vehicle at each time is predicted; estimating a predicted amount of regenerative energy, the regenerative energy being energy that is recoverable by regenerative braking of the electric motor; and determining the power source used for traveling based on the predicted amount of the regenerative energy, characterized by approximating the speed profile with a predetermined approximation model to result in an approximation result and in that the estimating a predicted amount of regenerative energy is based on the approximation result.

According to the invention, a travel control device can be provided that creates a speed profile in which the speed of a vehicle is predicted, quantitatively predicts a recovery amount of regenerative energy based on the speed profile, and uses the predicted recovery amount for travel control.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a functional block diagram of a travel control device according to an embodiment of the invention and its peripheral components;
FIG. 2 is a flowchart of a travel control process according to the embodiment of the invention;
FIG. 3 is a graph showing an example of a speed profile according to the embodiment of the invention;
FIG. 4 is a graph showing a Gaussian function;
FIG. 5 is a graph showing a part of the example of the speed profile according to the embodiment of the invention and an approximation of the part of the example of the speed profile with the Gaussian function;
FIG. 6 is a graph showing the example of the speed profile according to the embodiment of the invention and an approximation the example of the speed profile with the Gaussian function;
FIG. 7 is a graph showing an example of the amount of required power according to the embodiment of the invention that is linked to a change in kinetic energy and the amount of the required power that is dissipated by travel resistance;
FIG. 8 is a graph showing an example of the required power according to the embodiment of the invention; and
FIG. 9 is a graph showing an example of an integral value of the required power according to the embodiment of the invention.

DETAILED DESCRIPTION OF EMBODIMENTS

Embodiment

An embodiment of the invention will be described below with reference to the drawings. A travel control device according to the present embodiment uses a speed profile in which a speed of a vehicle is predicted to quantitatively predict a recovery amount of regenerative energy at an early stage to perform suitable travel control for improving fuel efficiency.

Configuration

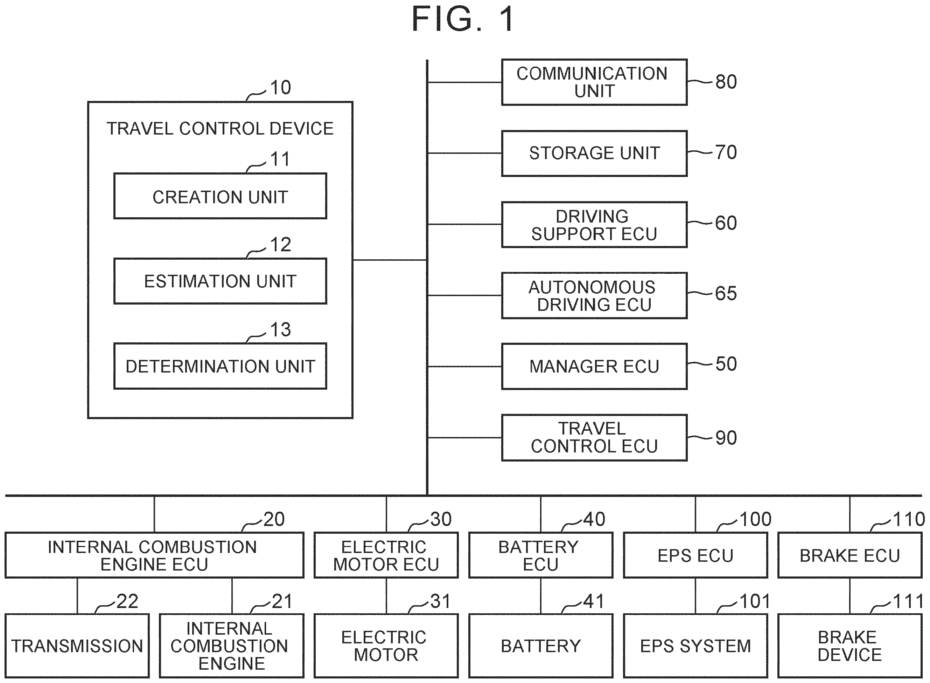

FIG. 1 shows functional blocks of a travel control device 10 according to the present embodiment and its peripheral components. The travel control device 10 is mounted on a vehicle. The vehicle includes, in addition to the travel control device 10, an internal combustion engine electronic control unit (ECU) 20, an internal combustion engine 21, a transmission 22, an electric motor ECU 30, an electric motor 31, a battery ECU 40, a battery 41, a manager ECU 50, a driving support ECU 60, an autonomous driving ECU 65, a storage unit 70, a communication unit 80, a travel control ECU 90, an electric power steering (EPS) ECU 100, an EPS system 101, a brake ECU 110, and a brake device 111.

The vehicle may also include various devices such as an accelerator pedal sensor, a brake pedal sensor, a camera or an obstacle sensor, a vehicle speed sensor, a yaw rate sensor, a global positioning system (GPS) sensor, and various other sensors, and a navigation system, but the various devices are not shown.

The internal combustion engine 21 and the electric motor 31 are actuators that serve as a power source for driving the vehicle. The electric motor 31 is also a generator that generates power and a brake system that generates a braking force by regenerative braking.

The internal combustion engine ECU 20 is an ECU that controls the internal combustion engine 21 and the transmission 22, which changes a rotation speed between input and output, to generate a drive torque and to generate a braking torque with engine braking.

The electric motor ECU 30 is an ECU that controls the electric motor 31 to generate the drive torque and to generate a braking torque with regenerative braking.

The battery 41 supplies electric power to the electric motor 31 and other devices by discharging, and is charged with electric power (recovered energy) obtained by regenerative braking of the electric motor 31. The battery ECU 40 is an ECU that controls charging and discharging of electric power of the battery 41.

The travel control ECU 90 is an ECU that controls the internal combustion engine ECU 20 and the electric motor ECU 30 in accordance with a travel mode described later.

The EPS system 101 is an actuator that performs steering by changing a steered angle of wheels to change a traveling direction of the vehicle. The EPS ECU 100 is an ECU that controls the EPS system 101.

The brake device 111 (foot brake device) is an actuator that generates a braking force by a frictional force applied to a member that rotates with a wheel. The brake ECU 110 is an ECU that controls the brake device 111.

The driving support ECU 60 is an ECU that executes functions of driving support such as collision avoidance, front-vehicle following, and lane keeping. The driving support ECU 60 outputs an instruction to control a motion of the vehicle including acceleration/deceleration and the steered angle based on information acquired from various sensors and the like. The function of the driving support ECU 60 and the number of the driving support ECUs 60 are not limited.

The autonomous driving ECU 65 outputs an instruction for controlling the motion of the vehicle including the acceleration/deceleration and the steered angle to execute the function of autonomous driving based on information acquired from various sensors or the like.

The manager ECU 50 gives an instruction to the travel control ECU 90, the EPS ECU 100, the brake ECU 110, etc. (hereinafter collectively referred to as actuator ECUs) based on instructions from the driving support ECU 60, the autonomous driving ECU 65, and the like. For example, an instruction for acceleration is given to the travel control ECU 90, an instruction for steering is given to the EPS ECU 100, and an instruction for deceleration is given to the travel control ECU 90 and the brake ECU 110.

Upon receiving an instruction from a plurality of driving support ECUs 60 or the like, the manager ECU 50 performs a process called arbitration, in which the manager ECU 50 determines which instruction to follow to control the vehicle, based on a predetermined rule, and gives an instruction to the actuator ECUs based on the arbitration result. The operations of a steering wheel, a brake pedal, an accelerator pedal, and the like by the user may be acquired by the manager ECU 50 and subjected to arbitration process by the manager ECU 50, or may be acquired by the actuator ECUs and the actuator ECUs may individually arbitrate between manual operations by the user and the instruction from the manager ECU 50.

The storage unit 70 stores one or more travel histories of the user. The travel history is information including the speed of the vehicle at each time point during a driving period when the vehicle was driven in the past. The storage unit 70 generates the travel history by periodically storing the speed of the vehicle acquired from the vehicle speed sensor or the like mounted on the vehicle while the vehicle is in a power-on state, for example. The storage unit 70 may be provided as a part of a vehicle navigation system, for example.

The communication unit 80 can communicate wirelessly with a server outside the vehicle, another vehicle, etc., and can receive a travel history of another user that is obtained based on a travel result of another vehicle.

The travel control device 10 is an ECU that includes a creation unit 11, an estimation unit 12, and a determination unit 13. The creation unit 11 creates a speed profile based on the travel history. The estimation unit 12 estimates a predicted amount of regenerative energy, which is energy that can be recovered by regenerative braking, based on the speed profile. The determination unit 13 determines any of the electric motor 31 and the internal combustion engine 21 to be used for traveling based on the predicted amount of the regenerative energy.

Each of the above ECUs is typically a computer including a memory and a processor. The processor of each ECU implements a function by, for example, reading and executing a program stored in a non-transitory memory. These ECUs are connected to each other by communication lines and can operate cooperatively by communicating with each other as appropriate.

The configuration of the devices mounted on the vehicle and the configuration of the travel control device 10 described above are merely examples, and additions, replacements, changes, and omissions can be made appropriately. Further, the functions of each device can be appropriately integrated into one device or distributed to a plurality of devices for implementation.

For example, the travel control device 10 may be provided as an independent ECU, or may be provided as a part of the manager ECU 50 or a part of the travel control ECU 90, or the like. Alternatively, the functions of the travel control device 10 may be distributed to the manager ECU 50, the travel control ECU 90, or the like.

For example, the travel control device 10, the driving support ECU 60, the autonomous driving ECU 65, the manager ECU 50, the travel control ECU 90, or the like may be provided as a single ECU. Further, for example, the autonomous driving ECU 65 need not be provided.

Process

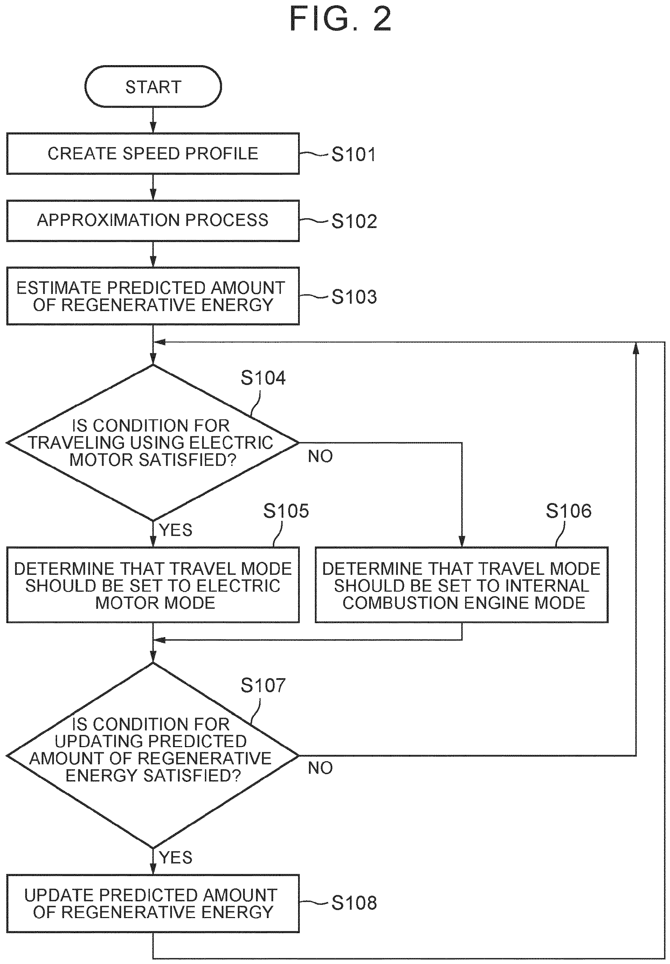

Details of the processes according to the present embodiment will be described below. FIG. 2 is a flowchart of the processes executed by the travel control device 10. The processes are started, for example, when the user sets the vehicle into a power-on state and starts a trip, and are executed until the user sets the vehicle into the power-off state and ends the trip.

Step S101

The creation unit 11 creates the speed profile. The speed profile is information representing the speed of the vehicle at each time point that is predicted in the current trip.

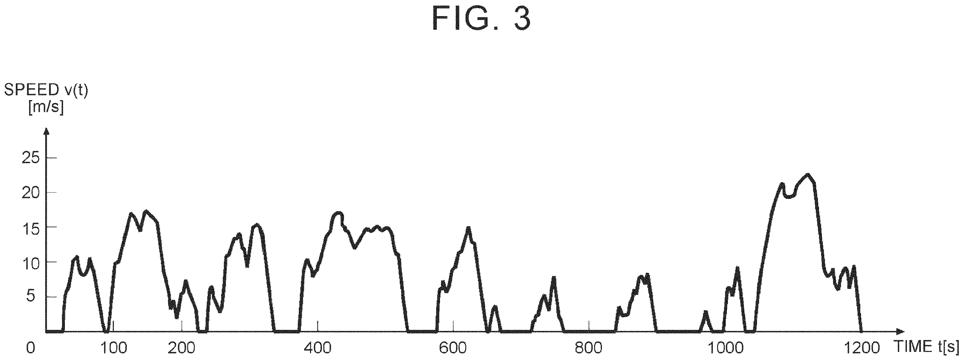

FIG. 3 shows an example of the speed profile. In FIG. 3, the horizontal axis shows the time elapsed from the start of the trip, and the vertical axis shows the speed of the vehicle. As an example, FIG. 3 shows the speed profile based on a speed change pattern used in the fuel consumption rate test (JC08 mode) established in Japan. A graph of the speed profile generally includes multiple peaks, indicating that acceleration and deceleration are repeated during a single trip.

The creation unit 11 can create the speed profile, for example, based on the travel history stored in the storage unit 70. As a simple example, when the user's travel pattern includes only a pattern in which the user travels on the same route in the same time of day on weekdays for commuting, it is considered that the patterns of speed changes over time that are included in the travel histories are substantially the same. In such a case, the creation unit 11 can create the speed profile based on one of the past travel histories.

The storage unit 70 can associate the travel histories with attributes such as the day of the week and the time of day in which the vehicle has traveled, and classify and store the associated travel histories and the attributes. Thus, the creation unit 11 can create the speed profile based on the travel history having a large number of attributes such as the day of the week and the time of day that match those of the current trip. As a result, even for a user who has more than one travel pattern, as long as the attributes have common travel patterns, the travel pattern can be specified with a certain accuracy and the speed profile can be created accurately.

The storage unit 70 may acquire a travel route from a navigation system or the like included in the vehicle and store the travel route in the travel history. Thus, the creation unit 11 can create the speed profile based on a travel history including a travel route having high similarities with the travel route of the current trip. This method can be executed when the user sets the travel route in the navigation system or the like in the current trip and the creation unit 11 can acquire the set travel route. The accuracy of the speed profile can thus be improved.

When the travel route is set for the current trip, the creation unit 11 can inquire of the server on road traffic information such as a speed limit and a traffic congestion prediction on the travel route via the communication unit 80, and create the speed profile based on the road traffic information. Alternatively, the creation unit 11 can request, via the communication unit 80, the server that can create the speed profile based on the road traffic information on the travel route to create the speed profile, and acquire the created speed profile.

The creation unit 11 may acquire the travel history of another user via the communication unit 80 and create a speed profile based on the travel history. The server collects, for example, travel histories associated with the day of the week, the time of day, the travel route, and the like from a large number of vehicles, and classifies and stores the travel histories. The creation unit 11 can acquire the travel history having a high matching degree of classification with the current trip and create the speed profile based on the travel history.

The server may divide a plurality of people into groups and store the travel history of each person for each group. The creation unit 11 may create the speed profile based on the travel history selected from the same group to which the user belongs. For example, when people with their homes and workplaces located in the same area belong to the same group, the accuracy of the speed profile when traveling for commuting can be improved.

Alternatively, the creation unit 11 may acquire, via the communication unit 80, the travel history stored in one or more vehicles instead of the server, and create the speed profile in the same manner as described above based on the acquired travel history.

In each of the above-mentioned methods, when there are a plurality of travel histories that serves as candidates for the speed profile, for example, the creation unit 11 may set any one of the travel histories as the speed profile, or may average the travel histories as the speed profile. The creation method of the speed profile is not limited, and the above methods may be combined as appropriate. The speed profile may be created using only one of the travel history of the user and the travel history of another user, or the speed profile may be created using both of the travel history of the user and the travel history of another user.

Step S102

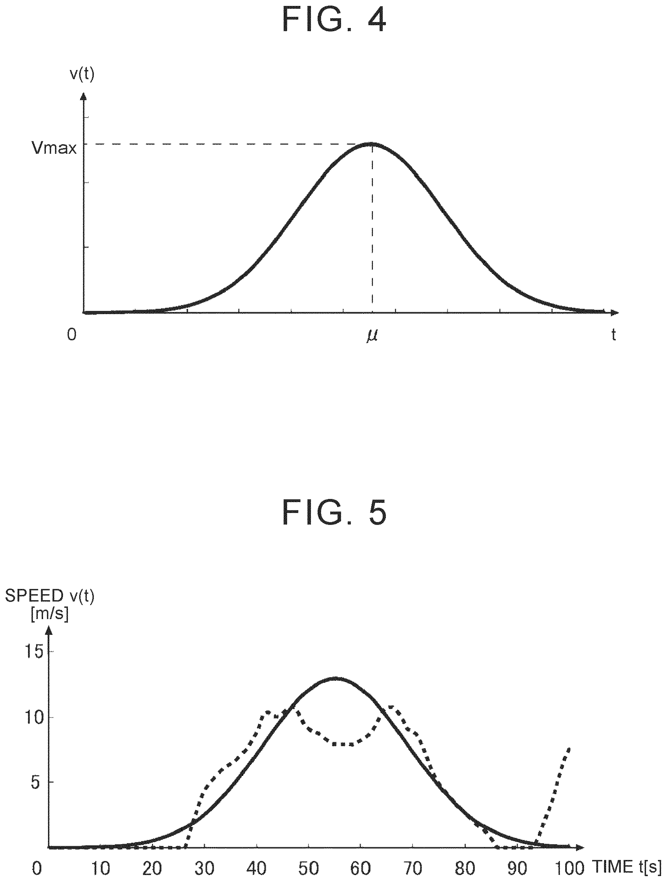

The estimation unit 12 approximates the speed profile with a predetermined approximation model. In this embodiment, the sum of Gaussian functions is used for the approximation. FIG. 4 shows a graph ($t \geq 0$) of the Gaussian function represented by (Expression 1) and having the time t as a variable. Here, $\mu$ is a parameter that defines a peak position (time), $v_{max}$ is a parameter that defines a peak value, and $\sigma$ is a parameter that defines the spread of the distribution.

$$v(t) = v_{max} \cdot \exp\left(\frac{-(t-\mu)^2}{2\sigma^2}\right) \qquad \text{(Expression 1)}$$

FIG. 5 shows a graph approximating the speed change in the range of $0 \leq t \leq 100$ (seconds) of the speed profile shown in FIG. 3 with the parameters $\mu$, $v_{max}$ and $\sigma$ in Expression 1 appropriately set. In FIG. 5, the speed profile is shown by a dotted line, and the approximate graph is shown by a solid line.

In the present embodiment, the entire speed profile is approximated by the sum of Gaussian functions having different peak positions $\mu_i$. Each Gaussian function can have different peak values $v_{maxi}$ and distribution spreads $\sigma_i$. When the number of Gaussian functions to be used is represented by N, an approximate Expression can be represented by Expression 2 using $\mu_i$, $v_{maxi}$, and $\sigma_i$ ($i = 1, 2, ..., N$) as parameters.

$$v(t) = \sum_{i=1}^{N} v_{maxi} \cdot \exp\left(\frac{-(t-\mu_i)^2}{2\sigma_i^2}\right) \qquad \text{(Expression 2)}$$

Here, suitable values can be derived as the parameters $\mu_i$, $v_{maxi}$, and $\sigma_i$ ($i = 1, 2, ..., N$) using a known fitting method. For example, the values may be defined so that a minimum integral value S is obtained by integrating an absolute value of the difference between a speed value V(t) and an approximate value v(t) over the entire period ($0 \leq t \leq T$) of the speed profile. The integral value S is represented by Expression 3.

$$S = \int_0^T |V(t) - v(t)| \, dt \qquad \text{(Expression 3)}$$

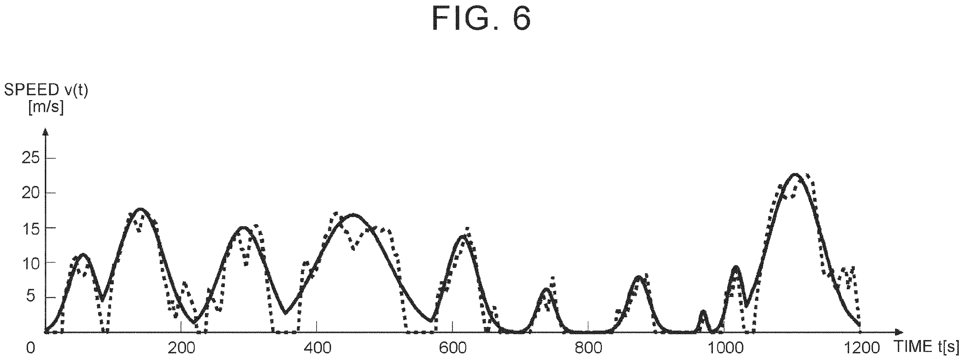

With this method, the parameters $\mu_i$, $v_{maxi}$, and $\sigma_i$ ($i = 1, 2, ..., N$) in Expression 2 are derived, and a graph approximating the speed change over the entire period of the speed profile shown in FIG. 3 is shown in FIG. 6. In FIG. 6, the speed profile is shown by a dotted line, and the approximate graph is shown by a solid line. In this example, N= 10.

It can be understood from FIG. 6 that a good approximation characterizing the speed change in one trip can be obtained. The value of N is not limited, and may be determined according to the length of the trip period of the speed profile and the number of peaks in the speed change. For example, in the case of a trip of about 1200 seconds, a good approximation can be obtained with N = 10, and a better approximation can be obtained with N = 20. Note that N = 1 may be set when the trip period is relatively short or when the number of peaks is relatively small.

Step S103

The estimation unit 12 estimates a predicted amount of regenerative energy that is energy obtained by regenerative braking of the electric motor 31, using the approximate model. The estimation method will be described below.

First, the estimation unit 12 derives a required power P (t) that is a power to be given to the vehicle in order to maintain the speed v(t). The required power P(t) is represented by Expression 4.

$$P(t) = m \cdot \frac{dv(t)}{dt} \cdot v(t) + \left\{ a \cdot \left( v(t) \right)^2 + b \cdot v(t) + c \right\} \cdot v(t) \quad \text{(Expression 4)}$$

Here, m represents the weight of the vehicle. The Expression $m \cdot dv(t)/dt$ represents the change rate of a momentum of the vehicle, and the Expression $a \cdot (v(t))^2 + b \cdot v(t) + c$ represents a travel resistance. The required power P(t) is the sum of the above Expressions each multiplied by the vehicle speed v(t). That is, the required power P(t) is the sum of the power that contributes to the change in the kinetic energy of the vehicle and the power that is dissipated by the travel resistance, and is the power that is necessary to realize the speed v(t) at the time t. The travel resistance can be appropriately approximated by using the sum of a component proportional to the square of the speed, a component proportional to the first power of the speed, and a constant component as shown in Expression 4.

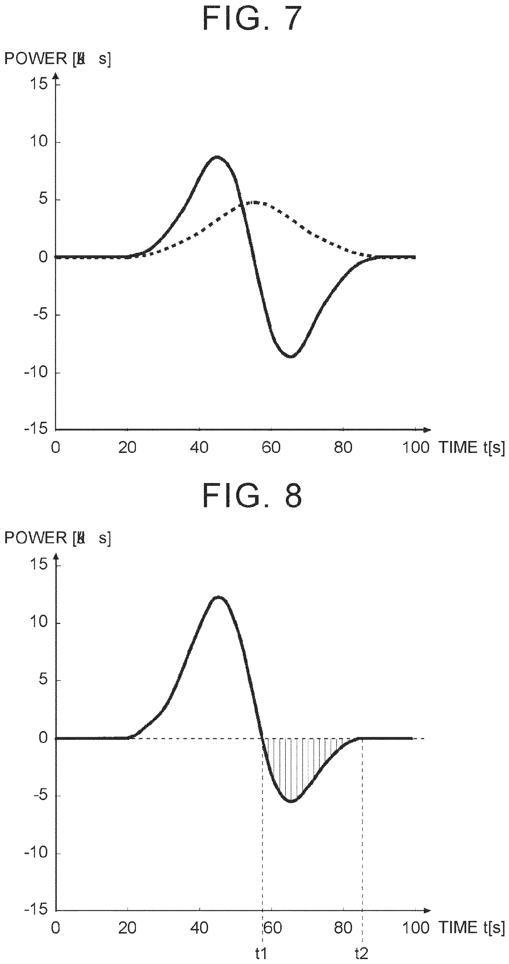

FIG. 7 shows an example of the amount of the required power P(t) that contributes to the change in kinetic energy (first term on the right side of Expression 4) with a solid line and an example of an amount of the required power P(t) that dissipates due to the travel resistance (second term on the right side of Expression 4) with a dotted line of the required power P(t) in the range of $0 \le t \le 100$ (seconds) of the speed profile shown in FIG. 3, with the horizontal axis representing the time and the vertical axis representing the power.

FIG. 8 shows a graph of the total amount of the required power P(t), with the horizontal axis representing the time and the vertical axis representing the power.

Next, the estimation unit 12 estimates a period in which it is predicted that the regenerative energy can be recovered and the predicted amount of recovery based on the required power P(t). In the graph shown in FIG. 8, the period in which the value of the required power P(t) becomes negative (t1 < t < t2) is the period in which it is predicted that the regenerative energy can be recovered. The integral value of the magnitude of the required power in the above period that is represented by Expression 5, that is, the area of the hatched region in FIG. 8 is an estimated value E of the predicted amount of the regenerative energy to be recovered.

$$E = \int_{t1}^{t2} |P(t)| \, dt \qquad \text{(Expression 5)}$$

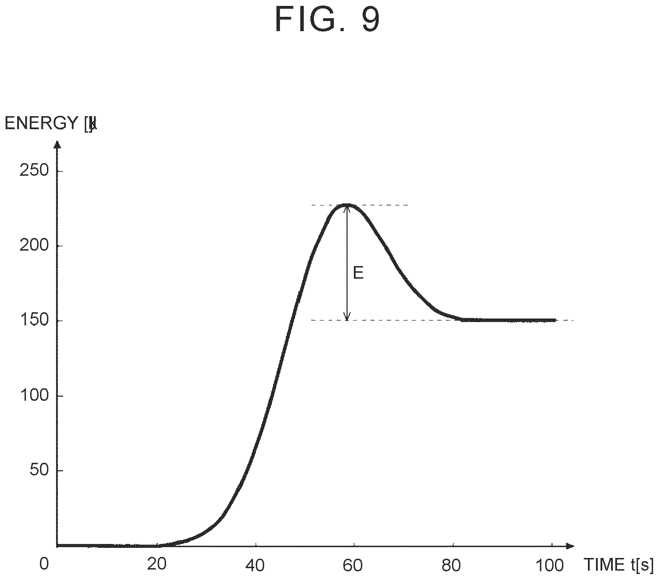

FIG. 9 shows a graph of an integral value I(t) of the required power shown in FIG. 8 from time 0 to time t, with the horizontal axis representing the time and the vertical axis representing the energy. The integral value I(t) is represented by Expression 6.

$$I(t) = \int_{0}^{t} P(T) \, dT \qquad \text{(Expression 6)}$$

In FIG. 9, the difference between the energy value at the peak and the energy value when the line becomes flat after the peak is equal to the estimated value E of the predicted amount of the regenerative energy to be recovered.

By extracting one or more periods in which the required power becomes negative as described above from the entire period of the speed profile and calculating the integral value of the magnitude of the required power for each period, one or more periods in which the regenerative energy can be recovered and the predicted amount of recovery for each period can be estimated at the start of the trip.

The weight m of the vehicle and the coefficients a, b, and c are basically constants defined based on the characteristics of the vehicle, and good estimation accuracy can be obtained by setting appropriate values. The estimation accuracy can be further improved when one or more variable factors that can influence the required power can be acquired and the following correction is made to at least one of the weight m and the coefficients a, b, and c based on the acquired variable factors.

For example, when the estimation unit 12 can obtain the load weight of an occupant, luggage, or the like from an input from a weight sensor or the like provided in the vehicle or from an input from a user, the estimation unit 12 can add the load weight to the weight m of the vehicle to correct the weight m.

The estimation unit 12 can correct the coefficients a, b, and c by using variation factors of the travel resistance such as the type of the road surface, the slope of the road surface, and weather, when the variation factors can be acquired.

For example, when the travel route is set for the current trip, the type of the road surface and the slope of the road surface can be specified, and the coefficients can be corrected using these pieces of information. Information on the type of the road surface and the slope of the road surface may be stored in advance in the storage unit 70 in association with the map information, or may be acquired by the communication unit 80 from an external server or the like. The coefficients can also be corrected using the weather. Weather information can be acquired by various sensors provided in the vehicle, or the communication unit 80 can acquire the weather information from an external server or the like.

For example, when the road surface is relatively slippery such as a gravel road, the travel resistance is corrected to be larger than that when the road is a paved road on which it is relatively difficult to slip.

When the slope of the road surface indicates that the road is an uphill road, the travel resistance is corrected so as to be larger than that when the road is a flat road, and when the slope of the road surface indicates that the road is a downhill road, the travel resistance is corrected so as to be smaller than that when the road is a flat road. The influence of increase or decrease in the positional energy of the vehicle on the required power P(t) is incorporated in Expression 4 by this correction of the travel resistance based on the slope of the road surface.

When the weather is rainy or snowy, the travel resistance is corrected to be larger than that when the weather is sunny. When the travel route is set for the current trip, the travel direction of the vehicle can be estimated, so the travel resistance may be corrected based on the wind force and the wind direction that are regarded as the weather. For example, when the wind force is not zero, the travel resistance is corrected to be larger in the case of headwind and smaller in the case of tailwind than when the wind force is zero based on the wind volume and the wind direction.

When the travel resistance is corrected in the above manner, specifically, the values of the coefficients a, b, and c are changed. In this case, the coefficients a, b, and c are changed depending on the position of the vehicle. The coefficients a, b, and c can each be reduced to the function of the time t with the approximation in Expression 2. The coefficient to be corrected out of the coefficients a, b and c and the extent of correction can be appropriately determined considering speed-dependent characteristics of the influence of the variation factors on the travel resistance.

The estimation unit 12 can correct the value of the estimated value E in accordance with the above-described variation factors, instead of the above correction or in addition to the above correction. That is, a correction coefficient $\alpha$ (for example, $0 \leq \alpha \leq 1$) can be set for each period so that the value of the corrected estimated value E becomes smaller as the load weight becomes larger or the travel resistance becomes larger due to the variation factors. The correction coefficient $\alpha$ may thus be corrected as represented by Expression 7.

$$E = \alpha \cdot \int_{t1}^{t2} |P(t)| dt \qquad \text{(Expression 7)}$$

The correction coefficient $\alpha$ may incorporate the efficiency of regenerative braking such that the estimated value E after correction increases as the efficiency of regenerative braking increases. The efficiency of regenerative braking can be derived, for example, based on the rotation speed of the electric motor 31 assumed in accordance with the speed v(t) and an efficiency map corresponding to the rotation speed.

The numerical calculation method for the above process is not specifically limited, and a known calculation algorithm can be used as appropriate. In the present embodiment, the approximation using the Gaussian functions can indicate the characteristics of the speed profile with relatively few parameters, so that the amount of calculation can be suppressed. The amount of calculation can be further reduced when the Gaussian functions and the function values of derivatives for multiple numerical values and definite integral values of the Gaussian functions in multiple numerical ranges are prepared in advance in a numerical table, and calculation is made by referring to the numerical table as appropriate.

Step S104

The determination unit 13 determines whether a condition for traveling using the electric motor 31 is satisfied. In the present embodiment, as an example, the determination unit 13 performs control of switching the travel mode between the electric motor mode in which only the electric motor 31 is used and the internal combustion engine mode in which only the internal combustion engine 21 is used.

Here, the determination unit 13 appropriately acquires various pieces of information from various sensors provided in the vehicle, the driving support ECU 60, the manager ECU 50, and the like, and makes the determination as described below, for example.

(1) When the intention to decelerate the vehicle is established, it is determined whether the following conditions (1-1) to (1-3) are satisfied. The intention to decelerate the vehicle is established means, for example, that at least one of the fact that brake pedal operation is performed by the user and accelerator pedal operation is released by the user while the vehicle is traveling is fulfilled, or an instruction indicating deceleration or stop is given from the driving support ECU or the autonomous driving ECU while the driving support function of the driving support ECU 60 and the autonomous driving function of the autonomous driving ECU 65 are in operation.

    (1-1) The speed of the vehicle is equal to or higher than a first speed threshold. When the current actual speed of the vehicle is relatively low, sufficient rotation speed of the electric motor 31 cannot be obtained during regenerative braking, and efficient recovery of regenerative energy cannot be predicted. Thus, it is determined whether the speed of the vehicle is equal to or higher than the first speed threshold that is defined as a speed at which a certain degree of regenerative efficiency can be predicted.

    (1-2) The required power is equal to or lower than a first power threshold. When the current required power is relatively large, the internal combustion engine 21 can output the required power, but since the electric motor 31 generally has a smaller maximum output than the internal combustion engine 21, the electric motor 31 may not be able to output the required power. Thus, it is determined whether the required power is equal to or lower than the first power threshold that is defined as a power that can be output from the electric motor 31.

    (1-3) The charge rate of the battery 41 is equal to or lower than a first charge rate threshold. When the current charge rate of the battery 41 is high, the amount of electric power that is further chargeable is small, and there is a possibility that all of the regenerative energy cannot be stored. Thus, it is determined whether the charge rate of the battery 41 is equal to or lower than the first charge rate threshold that is defined as a charge rate that allows a sufficient amount of electric power to be charged. The amount of charged electric power may be used instead of the charge rate for the determination.

    When all the determination results of (1-1) to (1-3) are affirmative, the process proceeds to step S105, and otherwise, the process proceeds to step S106.

(2) In cases other than the above (1), that is, except when the intention to decelerate the vehicle is established, it is determined whether the following conditions (2-1) to (2-4) are satisfied.

    (2-1) The speed of the vehicle is lower than a second speed threshold. The internal combustion engine 21 is generally more efficient than the electric motor 31 when the current actual speed of the vehicle is relatively high. Thus, it is determined whether the speed of the vehicle is lower than the second speed threshold that is defined as a speed at which the electric motor 31 can be predicted to be more efficient than the internal combustion engine 21. The second speed threshold is a speed higher than the first speed threshold.

    (2-2) The required power is equal to or lower than the first power threshold. For the same reason as (1-2) described above, it is determined whether the required power is equal to or lower than the first power threshold that is defined as the power that can be output from the electric motor 31.

    (2-3) The total amount of the energy for the electric motor that is currently charged in the vehicle and the predicted amount of energy to be recovered in the period in which the regenerative energy can be recovered next time is equal to or higher than a first energy threshold. When the total amount of the amount of electric power that is currently charged in the battery 41 in the vehicle and that can be supplied to the electric motor 31 and the predicted amount of electric power that can be recovered in the period in which the regenerative energy can be recovered next time is relatively small, and the vehicle is driven using the electric motor 31, the amount of electric power charged in the battery 41 may decrease, which may hinder the functions of the vehicle. Thus, it is determined whether the total amount described above is equal to or higher than the first energy threshold that is defined as a sufficient amount.

(2-4) The vehicle is currently traveling using the internal combustion engine 21, and a first time threshold or more has elapsed since the operation of the internal combustion engine 21 was started. When the operation of the internal combustion engine 21 is stopped immediately after the operation thereof is started, the user may feel a sense of malfunction of the internal combustion engine 21 or instability of vehicle behavior, which may cause discomfort or anxiety. Thus, it is determined whether the first time threshold, which is defined as a sufficient elapsed time that does not cause discomfort even after the operation of the internal combustion engine 21 is stopped, has elapsed since the operation of the internal combustion engine 21 was started.

When all the determination results of (2-1) to (2-4) are affirmative, the process proceeds to step S105, and otherwise, the process proceeds to step S106.

Step S105

The determination unit 13 determines that the travel mode should be set to the electric motor mode. In the present embodiment, the determination unit 13 notifies the travel control ECU 90 that the travel mode is set to the electric motor mode. The travel control ECU 90 causes the electric motor ECU 30 to control traveling using the electric motor 31.

In the electric motor mode, regenerative braking is performed to recover the kinetic energy of the vehicle as electric power. When the user depresses the brake pedal to a large extent, or the driving support ECU 60 issues a highly-prioritized rapid deceleration instruction to avoid a collision, etc., and a deceleration of a certain degree or more is required, the manager ECU 50 and the brake ECU 110 performs control to generate the braking force with the brake device 111 in order to generate sufficient braking force.

Step S106

The determination unit 13 determines that the travel mode should be set to the internal combustion engine mode. In the present embodiment, the determination unit 13 notifies the travel control ECU 90 that the travel mode is set to the internal combustion engine mode. The travel control ECU 90 causes the internal combustion engine ECU 20 to control traveling with the internal combustion engine 21.

Step S107

The creation unit 11 determines whether a condition for updating the predicted amount of the regenerative energy is satisfied. The condition for the update is, for example, that the matching degree between the speed change over time in actual traveling up to the current time and the speed profile created in step S101 is lower than a predetermined allowable value. The matching degree can be derived by using a known method as appropriate. For example, the matching degree can be derived based on the integral value in the past fixed period of the absolute values of the difference between the speed value of the speed profile and the actual speed value. When the matching degree is lower than an allowable value, it is considered that the accuracy of the period in which the regenerative energy can be recovered and the predicted amount of the regenerative energy are also low. When the condition for the update is satisfied, the process proceeds to step S108, and when the condition for the update is not satisfied, the process proceeds to step S104.

Step S108

The estimation unit 12 updates the period in which the regenerative energy can be recovered and the predicted amount of the regenerative energy by re-estimating the period in which the regenerative energy can be recovered and the predicted amount of the regenerative energy. The updating method is not particularly limited. For example, the estimation unit 12 can perform a modification that compresses or expands the time scale of the speed profile so that the matching degree between the speed change over time in the actual traveling up to the current time and the speed profile created in step S101 becomes high, and can perform the same process as steps S102 and S103 based on the speed profile after the modification to perform the update.

Alternatively, the creation unit 11 can perform the same process as step S101, select a travel history other than the travel history used to create the current speed profile, and create a new speed profile based on the travel history. The estimation unit 12 can perform the same process as steps S102 and S103 based on the newly created speed profile to perform the update. For example, when the vehicle stops, considering that a new trip is to be started from that location at that time, and the travel history can be selected in the same manner as in step S101.

Since there is a possibility that the values of the above-mentioned variation factors have changed, the correction may be performed using the latest value in the above update. By performing such an update, it is possible to improve the estimation accuracy of the period in which the regenerative energy can be recovered and the predicted amount of the regenerative energy. After the process in this step, the process proceeds to step S104.

In the above process, two travel modes are set: an electric motor mode in which only the electric motor 31 is used for traveling and an internal combustion engine mode in which only the internal combustion engine 21 is used for traveling. As in the condition (2-3) described above, when it can be predicted that the amount of the regenerative energy to be recovered is large, the opportunities of traveling using the electric motor 31 are increased, which can improve fuel consumption, compared to when it is predicted that the amount of the regenerative energy to be recovered is small. In view of the above, the predicted amount of the regenerative energy to be recovered can also be used to improve fuel efficiency in switching control between any two travel modes among three travel modes including the electric motor mode, the internal combustion engine mode, and a hybrid mode in which the electric motor 31 and the internal combustion engine 21 are both used for traveling, and in switching control between the three travel modes.

For example, when it can be predicted that the amount of the regenerative energy to be recovered is large, the opportunities of shifting from the internal combustion engine mode to the hybrid mode can be increased or the opportunities of shifting from the hybrid mode to the electric motor mode can be increased compared to when it is predicted that the amount of the regenerative energy to be recovered is small.

Effect

The travel control device 10 according to the present embodiment can quantitatively predict the amount of the regenerative energy to be recovered at an early stage using the speed profile in which the speed of the vehicle is predicted. It is possible to perform suitable travel control using the predicted result. That is, when it can be predicted that the amount of the regenerated energy to be recovered is large, it is possible to increase the opportunities of traveling using the electric motor 31 and improve fuel efficiency, as compared to when it is predicted that the amount of the regenerative energy to be recovered is small.

The travel control device 10 can suppress the number of parameters for calculating the predicted amount of the regenerative energy to be recovered by approximating the speed profile with the Gaussian functions, and can suppress the amount of calculation by referring to a numerical table including the Gaussian functions that is prepared in advance.

Since the travel control device 10 can create the speed profile based on the travel history of the user and the travel history of another user, it is possible to estimate the predicted amount of the regenerative energy to be recovered even when the user has not set the travel route. When the user sets the travel route, the speed profile can be created using the travel route, and the estimation accuracy can be improved.

Since the travel control device 10 corrects the predicted amount based on the variable factors that are considered to influence the amount of the regenerative energy to be recovered, the estimation accuracy can be improved by incorporating the variable factors.

When the matching degree between the speed profile and the actual change in the speed of the vehicle over time is low, the travel control device 10 estimates the predicted amount of recovery again, and thus the estimation accuracy can be improved.

When determining the travel mode, the travel control device 10 determines which of the internal combustion engine 21 and the electric motor 31 is suitable taking into account the chargeability of the regenerative energy, the operation efficiency, and the possibility of realizing the required power based on the charge rate of the battery 41, the vehicle speed, and the required power, as well as the predicted amount of the regenerative energy to be recovered. It is thus possible to enhance the certainty and stability of vehicle control.

Although the embodiment of the invention has been described above, the invention can be modified and implemented as appropriate. The invention can be considered as a travel control device, a travel control method that is executed by a travel control device including a processor and a memory, a travel control program, a computer-readable non-transitory storage medium that stores a travel control program, and a vehicle equipped with a travel control device.

The invention is useful for a travel control device that is mounted on a vehicle or the like.

**Claims**

1. A travel control device (10) mounted on a vehicle including an electric motor and an internal combustion engine (21) as a power source, the travel control device comprising:

   a creation unit (11) configured to create a speed profile in which a speed of the vehicle at each time is predicted;
   an estimation unit (12) configured to estimate a predicted amount of regenerative energy, the regenerative energy being energy that is recoverable by regenerative braking of the electric motor; and
a determination unit (13) configured to determine the power source to be used for traveling based on the predicted amount of the regenerative energy,
**characterized in that** the estimation unit (12) is configured to approximate the speed profile with a predetermined approximation model to result in an approximation result and estimate the predicted amount of regenerative energy based on the approximation result.

2. The travel control device according to claim 1, wherein the creation unit (11) is configured to create the speed profile based on one of or both of a travel history of a user and a travel history of another user.

3. The travel control device according to claim 1 or 2, wherein the predetermined approximation model is configured to use a model that approximates a change in the speed of the vehicle over time that is indicated in the speed profile with a sum of Gaussian functions having different peak positions.

4. The travel control device according to claim 3, wherein the estimation unit (12) is configured to derive, based on the approximation result, a power indicated by a sum of a power that contributes to a change in kinetic energy of the vehicle and a power that is dissipated by travel resistance, and regard a time integration value of a magnitude of the power during a period as an estimated value of a predicted amount of the regenerative energy to be recovered, the period being one or more periods in which the power is negative and a period in which the regenerative energy is recoverable.

5. The travel control device according to claim 4, wherein the estimation unit (12) is configured to estimate the predicted amount of the regenerative energy based further on one or more variation factors.

6. The travel control device according to claim 5, wherein the variation factors are at least one of a type of a road surface, a slope of the road surface, a load weight of the vehicle, and weather.

7. The travel control device according to claim 5 or 6, wherein the estimation unit (12) is configured to correct the power based on the variation factors.

8. The travel control device according to any one of claims 5 to 7, wherein the estimation unit (12) is configured to correct the time integration value based on the variation factors.

9. The travel control device according to any one of claims 4 to 8, wherein the determination unit (13) is configured to determine that the electric motor is to be used for traveling when a condition including that a total amount of energy for the electric motor that is currently charged in the vehicle and the predicted amount of the regenerative energy in the next period is equal to or higher than a threshold is satisfied.

10. A travel control method executed by a travel control device (10) mounted on a vehicle including an electric motor and an internal combustion engine (21) as a power source, the travel control method comprising:

    creating a speed profile in which a speed of the vehicle at each time is predicted;
    estimating a predicted amount of regenerative energy, the regenerative energy being energy that is recoverable by regenerative braking of the electric motor; and
    determining the power source used for traveling based on the predicted amount of the regenerative energy,
    **characterized by** approximating the speed profile with a predetermined approximation model to result in an approximation result and in that the estimating a predicted amount of regenerative energy is based on the approximation result.

11. A non-transitory storage medium that stores a travel control program that causes a computer of a travel control device that is mounted on a vehicle including an electric motor and an internal combustion engine as a power source to execute the following functions:

    creating a speed profile in which a speed of the vehicle at each time is predicted;
    estimating a predicted amount of regenerative energy, the regenerative energy being energy that is recoverable by regenerative braking of the electric motor; and
    determining the power source used for traveling based on the predicted amount of the regenerative energy,
    **characterized by** approximating the speed profile with a predetermined approximation model to result in an approximation result and in that the estimating a predicted amount of regenerative energy is based on the approximation result.

**Patentansprüche**

1. Fahrsteuerungsvorrichtung (10), die an ein Fahrzeug montiert ist, einschließlich eines Elektromotors und eines Verbrennungsmotors (21) als eine Energiequelle, wobei die Fahrsteuerungsvorrichtung Folgendes umfasst:

    eine Erstellungseinheit (11), die konfiguriert ist, um ein Geschwindigkeitsprofil zu erstellen, in dem eine Geschwindigkeit des Fahrzeugs zu jeder Zeit vorhergesagt wird;
    eine Schätzeinheit (12), die konfiguriert ist, um eine vorhergesagte Menge von regenerativer Energie zu schätzen, wobei die regenerative Energie Energie ist, die durch regeneratives Bremsen des Elektromotors rückgewonnen werden kann; und
    eine Bestimmungseinheit (13), die konfiguriert ist, um die Energiequelle zu bestimmen, die zum Fahren verwendet werden soll, basierend auf der vorhergesagten Menge der regenerativen Energie,
    **dadurch gekennzeichnet, dass** die Schätzeinheit (12) konfiguriert ist, um sich dem Geschwindigkeitsprofil mit einem vorbestimmten Approximationsmodell anzunähern, um in einem Approximationsergebnis zu resultieren und die vorhergesagte Menge von regenerativer Energie basierend auf dem Approximationsergebnis zu schätzen.

2. Fahrsteuerungsvorrichtung nach Anspruch 1, wobei die Erstellungseinheit (11) konfiguriert ist, um das Geschwindigkeitsprofil basierend auf einem aus oder beiden aus einem Reiseverlauf eines Nutzers und einem Reiseverlauf eines anderen Nutzers zu erstellen.

3. Fahrsteuerungsvorrichtung nach Anspruch 1 oder 2, wobei das vorbestimmte Approximationsmodell konfiguriert ist, um ein Modell zu verwenden, das sich einer Veränderung in der Geschwindigkeit des Fahrzeugs im Laufe der Zeit annähert, die in dem Geschwindigkeitsprofil mit einer Summe aus Gauß-Funktionen mit unterschiedlichen Gipfelpositionen angegeben wird.

4. Fahrsteuerungsvorrichtung nach Anspruch 3, wobei die Schätzeinheit (12) konfiguriert ist, um, basierend auf dem Approximationsergebnis, eine Energie abzuleiten, die durch eine Summe einer Energie, die zu einer Veränderung der kinetischen Energie des Fahrzeugs beiträgt, und einer Energie, die durch Fahrwiderstand dissipiert wird, angegeben wird, und um einen Zeitintegrationswert einer Größe der Energie während eines Zeitraums als einen geschätzten Wert einer vorhergesagten Menge der regenerativen Energie, die rückgewonnen werden soll, zu erachten, wobei der Zeitraum ein oder mehrere Zeiträume, in dem die Energie negativ ist, und ein Zeitraum, in dem die regenerative Energie rückgewonnen werden kann, ist.

5. Fahrsteuerungsvorrichtung nach Anspruch 4, wobei die Schätzeinheit (12) konfiguriert ist, um die vorhergesagte Menge der regenerativen Energie basierend ferner auf einem oder mehreren Variationsfaktoren zu schätzen.

6. Fahrsteuerungsvorrichtung nach Anspruch 5, wobei die Variationsfaktoren mindestens eines aus einer Art einer Fahrbahnoberfläche, einer Neigung der Fahrbahnoberfläche, eines Lastgewichts des Fahrzeugs und Wetter sind.

7. Fahrsteuerungsvorrichtung nach Anspruch 5 oder 6, wobei die Schätzeinheit (12) konfiguriert ist, um die Energie basierend auf den Variationsfaktoren zu korrigieren.

8. Fahrsteuerungsvorrichtung nach einem der Ansprüche 5 bis 7, wobei die Schätzeinheit (12) konfiguriert ist, um den Zeitintegrationswert basierend auf den Variationsfaktoren zu korrigieren.

9. Fahrsteuerungsvorrichtung nach einem der Ansprüche 4 bis 8, wobei die Bestimmungseinheit (13) konfiguriert ist, um zu bestimmen, dass der Elektromotor zum Fahren verwendet werden soll, wenn eine Bedingung, einschließlich, dass eine Gesamtmenge von Energie für den Elektromotor, der derzeit geladen wird, im Fahrzeug und die vorhergesagte Menge der regenerativen Energie in dem nächsten Zeitraum gleich wie oder größer als ein Schwellenwert ist, erfüllt ist.

10. Fahrsteuerungsverfahren, das durch eine Fahrsteuerungsvorrichtung (10) ausgeführt wird, die an ein Fahrzeug montiert ist, einschließlich eines Elektromotors und eines Verbrennungsmotors (21) als eine Energiequelle, wobei das Fahrsteuerungsverfahren Folgendes umfasst:

Erstellen eines Geschwindigkeitsprofils, in dem eine Geschwindigkeit des Fahrzeugs zu jeder Zeit vorhergesagt wird;

Schätzen einer vorhergesagten Menge von regenerativer Energie, wobei die regenerative Energie Energie ist, die durch regeneratives Bremsen des Elektromotors rückgewonnen werden kann; und

Bestimmen der Energiequelle, die zum Fahren verwendet wird, basierend auf der vorhergesagten Menge der regenerativen Energie,

**gekennzeichnet durch** sich dem Geschwindigkeitsprofil mit einem vorbestimmten Approximationsmodell Annähern, um in einem Approximationsergebnis zu resultieren, und **dadurch, dass** das Schätzen einer vorhergesagten Menge von regenerativer Energie auf dem Approximationsergebnis basiert.

11. Nichttransitorisches Speichermedium, das ein Fahrsteuerungsprogramm speichert, das verursacht, dass ein Computer einer Fahrsteuerungsvorrichtung, die an ein Fahrzeug montiert ist, einschließlich eines Elektromotors und eines Verbrennungsmotors als eine Energiequelle, die folgenden Funktionen ausführt:

Erstellen eines Geschwindigkeitsprofils, in dem eine Geschwindigkeit des Fahrzeugs zu jeder Zeit vorhergesagt wird;

Schätzen einer vorhergesagten Menge von regenerativer Energie, wobei die regenerative Energie Energie ist, die durch regeneratives Bremsen des Elektromotors rückgewonnen werden kann; und

Bestimmen der Energiequelle, die zum Fahren verwendet wird, basierend auf der vorhergesagten Menge der regenerativen Energie,

**gekennzeichnet durch** sich dem Geschwindigkeitsprofil mit einem vorbestimmten Approximationsmodell Annähern, um in einem Approximationsergebnis zu resultieren, und **dadurch, dass** das Schätzen einer vorhergesagten Menge von regenerativer Energie auf dem Approximationsergebnis basiert.

**Revendications**

1. Dispositif de commande de déplacement (10) monté sur un véhicule comprenant un moteur électrique et un moteur à combustion interne (21) en tant que source de puissance, le dispositif de commande de déplacement comprenant :

une unité de création (11) configurée pour créer un profil de vitesse dans lequel une vitesse du véhicule à chaque instant est prédite ;

une unité d'estimation (12) configurée pour estimer une quantité prédite d'énergie régénérative, l'énergie régénérative étant de l'énergie récupérable par un freinage régénératif du moteur électrique ; et

une unité de détermination (13) configurée pour déterminer la source de puissance à utiliser pour le déplacement sur la base de la quantité prédite de l'énergie régénérative,

**caractérisé en ce que** l'unité d'estimation (12) est configurée pour approximer le profil de vitesse avec un modèle d'approximation prédéterminé afin d'obtenir un résultat d'approximation et d'estimer la quantité prédite d'énergie régénérative sur la base du résultat d'approximation.

2. Dispositif de commande de déplacement selon la revendication 1, dans lequel l'unité de création (11) est configurée pour créer le profil de vitesse sur la base d'un historique de déplacement d'un utilisateur et/ou d'un historique de déplacement d'un autre utilisateur.

3. Dispositif de commande de déplacement selon la revendication 1 ou 2, dans lequel le modèle d'approximation prédéterminé est configuré pour utiliser un modèle qui approxime un changement de la vitesse du véhicule au cours du temps qui est indiqué dans le profil de vitesse avec une somme de fonctions gaussiennes ayant des positions de pic différentes.

4. Dispositif de commande de déplacement selon la revendication 3, dans lequel l'unité d'estimation (12) est configurée pour dériver, sur la base du résultat d'approximation, une puissance indiquée par une somme d'une puissance qui contribue à un changement d'énergie kinétique du véhicule et d'une puissance qui est dissipée par la résistance au déplacement, et pour considérer une valeur d'intégration temporelle d'une grandeur de la puissance pendant une période en tant que valeur estimée d'une quantité prédite d'énergie régénérative à récupérer, la période étant une ou plusieurs périodes dans lesquelles la puissance est négative et une période dans laquelle l'énergie régénérative est récupérable.

**5.** Dispositif de commande de déplacement selon la revendication 4, dans lequel l'unité d'estimation (12) est configurée pour estimer la quantité prédite d'énergie régénérative sur la base en outre d'un ou de plusieurs facteurs de variation.

**6.** Dispositif de commande de déplacement selon la revendication 5, dans lequel les facteurs de variation sont au moins l'un parmi un type de surface routière, une pente de la surface routière, un poids de charge du véhicule, et des conditions météorologiques.

**7.** Dispositif de commande de déplacement selon la revendication 5 ou 6, dans lequel l'unité d'estimation (12) est configurée pour corriger la puissance sur la base des facteurs de variation.

**8.** Dispositif de commande de déplacement selon l'une quelconque des revendications 5 à 7, dans lequel l'unité d'estimation (12) est configurée pour corriger la valeur d'intégration temporelle sur la base des facteurs de variation.

**9.** Dispositif de commande de déplacement selon l'une quelconque des revendications 4 à 8, dans lequel l'unité de détermination (13) est configurée pour déterminer que le moteur électrique doit être utilisé pour le déplacement lorsqu'une condition comprenant le fait qu'une quantité totale d'énergie pour le moteur électrique qui est actuellement chargée dans le véhicule et la quantité prédite d'énergie régénérative dans la période suivante est égale ou supérieure à un seuil est satisfaite.

**10.** Procédé de commande de déplacement exécuté par le dispositif de commande de déplacement (10) monté sur un véhicule comprenant un moteur électrique et un moteur à combustion interne (21) en tant que source de puissance, le procédé de commande de déplacement comprenant :

la création d'un profil de vitesse dans lequel une vitesse du véhicule à chaque instant est prédite ;
l'estimation d'une quantité prédite d'énergie régénérative, l'énergie régénérative étant de l'énergie qui est récupérable par un freinage régénératif du moteur électrique ; et
la détermination de la source de puissance utilisée pour le déplacement sur la base de la quantité prédite de l'énergie régénérative,
**caractérisé par** l'approximation du profil de vitesse avec un modèle d'approximation prédéterminé afin d'obtenir un résultat d'approximation et en ce que l'estimation d'une quantité prédite d'énergie régénérative est basée sur le résultat d'approximation.

**11.** Support de stockage non transitoire qui stocke un programme de commande de déplacement qui amène un ordinateur d'un dispositif de commande de déplacement monté sur un véhicule comprenant un moteur électrique et un moteur à combustion interne en tant que source de puissance à exécuter les fonctions suivantes :

la création d'un profil de vitesse dans lequel une vitesse du véhicule à chaque instant est prédite ;
l'estimation d'une quantité prédite d'énergie régénérative, l'énergie régénérative étant de l'énergie qui est récupérable par un freinage régénératif du moteur électrique ; et
la détermination de la source de puissance utilisée pour le déplacement sur la base de la quantité prédite de l'énergie régénérative,
**caractérisé par** l'approximation du profil de vitesse avec un modèle d'approximation prédéterminé afin d'obtenir un résultat d'approximation et en ce que l'estimation d'une quantité prédite d'énergie régénérative est basée sur le résultat d'approximation.

# FIG. 1

TRAVEL CONTROL DEVICE — 10

CREATION UNIT — 11

ESTIMATION UNIT — 12

DETERMINATION UNIT — 13

COMMUNICATION UNIT — 80

STORAGE UNIT — 70

DRIVING SUPPORT ECU — 60

AUTONOMOUS DRIVING ECU — 65

MANAGER ECU — 50

TRAVEL CONTROL ECU — 90

INTERNAL COMBUSTION ENGINE ECU — 20

ELECTRIC MOTOR ECU — 30

BATTERY ECU — 40

EPS ECU — 100

BRAKE ECU — 110

TRANSMISSION — 22

INTERNAL COMBUSTION ENGINE — 21

ELECTRIC MOTOR — 31

BATTERY — 41

EPS SYSTEM — 101

BRAKE DEVICE — 111

EP 3 828 048 B1

# FIG. 2

```
                    ┌─────────────┐
                    │    START    │
                    └──────┬──────┘
                           │
              ┌────────────▼────────────┐
              │  CREATE SPEED PROFILE   │──── S101
              └────────────┬────────────┘
                           │
              ┌────────────▼────────────┐
              │  APPROXIMATION PROCESS  │──── S102
              └────────────┬────────────┘
                           │
              ┌────────────▼────────────┐
              │  ESTIMATE PREDICTED     │──── S103
              │  AMOUNT OF REGENERATIVE │
              │  ENERGY                 │
              └────────────┬────────────┘
```

S104

IS CONDITION FOR TRAVELING USING ELECTRIC MOTOR SATISFIED?    NO

YES

S105

DETERMINE THAT TRAVEL MODE SHOULD BE SET TO ELECTRIC MOTOR MODE

S106

DETERMINE THAT TRAVEL MODE SHOULD BE SET TO INTERNAL COMBUSTION ENGINE MODE

S107

IS CONDITION FOR UPDATING PREDICTED AMOUNT OF REGENERATIVE ENERGY SATISFIED?    NO

YES

S108

UPDATE PREDICTED AMOUNT OF REGENERATIVE ENERGY

17

# FIG. 3

EP 3 828 048 B1

# FIG. 4

# FIG. 5

# FIG. 6

SPEED v(t)
[m/s]

25
20
15
10
5

0        200       400       600       800      1000      1200   TIME t[s]

EP 3 828 048 B1

# FIG. 7

# FIG. 8

# FIG. 9

**EP 3 828 048 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4702086 B
- US 2019001984 A

- DE 112016005586 T5